# EUROPEAN PATENT SPECIFICATION

(11) **EP 1 467 864 B1**
(45) Date of publication and mention of the grant of the patent: **25.07.2012**
(21) Application number: 02796956.7
(22) Date of filing: 05.12.2002
(51) Int. Cl.: B32B 27/08, B65D 65/46, B65D 75/44, B32B 7/06

(54) **MULTILAYERED FILMS**
MEHRSCHICHTFOLIE
FILMS MULTICOUCHES

(30) Priority: 06.12.2001 IN MU11582001
(43) Date of publication of application: 20.10.2004
(73) Proprietor: Arrow Coated Products Limited, Mumbai 400 053, Maharashtra (IN)
(72) Inventor: PATEL, Shilpan, Pravinchandra, Mumbai 400 053, Maharashtra (IN)
(74) Representative: Wightman, David Alexander
(86) International application number: PCT/IN2002/000230
(87) International publication number: WO 2003/047854

(56) References cited:
- EP-A- 0 723 859
- WO-A-00/64667
- WO-A-97/37903
- WO-A-98/45185
- US-A- 5 108 807
- US-A- 5 691 015
- DATABASE WPI Section Ch, Week 200010 Derwent Publications Ltd., London, GB; Class A18, AN 2000-110694 XP002239437 & JP 11 348201 A (KURARAY CO LTD), 21 December 1999 (1999-12-21)
- DATABASE WPI Section Ch, Week 200152 Derwent Publications Ltd., London, GB; Class A14, AN 2001-478507 XP002239438 & JP 2001 162678 A (KURARAY CO LTD), 19 June 2001 (2001-06-19)
- PATENT ABSTRACTS OF JAPAN vol. 1999, no. 02, 26 February 1999 (1999-02-26) & JP 10 291279 A (DAINIPPON PRINTING CO LTD), 4 November 1998 (1998-11-04)
- PATENT ABSTRACTS OF JAPAN vol. 1998, no. 13, 30 November 1998 (1998-11-30) & JP 10 218170 A (DAINIPPON PRINTING CO LTD), 18 August 1998 (1998-08-18)

## Description

### FIELD OF INVENTION

This invention relates to novel pin-hole free multi-layered films consisting of partially or fully water soluble films layered with substantially pin-hole free barrier coatings that are partially or fully water-soluble or dispersible and methods of manufacturing the same. The invention further relates to substrate based multi-layered films with water soluble or partially water-soluble films layered with substantially pinhole free barrier coatings and method of manufacturing the same.

### BACKGROUND AND PRIOR ART

Cold or hot water soluble films have been used for a variety of packaging applications including wrapping, pouches, bags and containers. Barrier coated soluble films are also known in the packaging industry. A feature that is of significance is clear, easy printing of words, figures, pictures, images etc on such soluble films to provide information on the packaged materials. Barrier coated water-soluble films have wide applications and are well known in the industry. Production of pinhole free barrier coated films of a range of thickness continues to pose challenges. Pinholes in barrier films lead to adverse effects on the packaged products. Plasticiser migration from the water-soluble film into the packed materials is also to be avoided. Pinhole free barrier coating is therefore of vital importance. Normally water-soluble films of this thickness by themselves are very difficult to make and handle due to their tensile strength changing properties. For example physical properties of water-soluble films are very sensitive to small variation in environmental conditions during the process of formation as they are susceptible to the development of brittleness in the presence of hot blast of dehumidified air and may easily tear. Similarly when subjected to high humidity levels such films tend to become highly tensile. Hence the manufacturing process of water-soluble films and its subsequent conversion processes have to be carried out under very rigid process conditions. Production of very thin water-soluble films of film thickness of less than 5 microns is difficult to achieve due to "bum out" effects before reaching the "film-forming stage". Moreover avoiding the formation of pinholes in conventional processes for water soluble with or without barrier coating has continued to be a problem.

Thus in the field of soluble films a long felt need to develop films with selective barrier protection that would hold a wide variety of materials and at the same time be amenable to easy handling in packaging and printing machines without getting affected during processing or by the product during storage of the products. Water soluble flexible films that are pinhole free, appropriate tensile strength, percentage elongation and impact strength to withstand mechanical stresses during the processing are most suited for a variety of applications including packaging of detergents, pharmaceuticals, agro-chemicals, food products etc: The challenge has been to produce multi-layered barrier films that are substantially pinhole free to withstand stresses during processing and at the same time retain their strength and integrity during storage.

US Patent 5,296,282 describes an invention related to a shaped article characterized by a substrate comprising a degradable, or partially degradable, synthetic polymeric material that degrades via hydrolysis and/or biodegradability; and one or more surfaces of the substrate which are coated with a discontinuous repellant hydrophobic and/or oleophobic material. More specifically the invention in US Patent 5,296,282 relates to shaped articles, particularly in film form, fabricated from synthetic polymeric materials that are degradable by hydrophilic and/or oleophilic liquids, wherein these articles are protected against premature degradation by these liquids. This protection is achieved by incorporating on the surface of the article to be protected a discontinuous surface layer of a hydrophobic and/or oleophobic material that will repel the assaulting or degrading liquids (i.e., hydrophilic and/or oleophilic liquids). The repellant surface is sufficiently discontinuous, normally in the form of a layer of discrete particles, so that degrading gas, vapors and bacteria can penetrate the repellant surface, thereby gaining access to the degradable substrate and initiating degradation of the substrate. However, because of the composition and physical nature (e.g., surface tension), of the repellant surface, the assaulting liquid cannot contact and degrade the substrate. Therefore, the shaped articles of the invention may be used as a container for an assaulting liquid and yet degrade eventually into environmentally benign products.

US Patent 5,300, 358 discloses an invention that relates to compostible non-rigid absorbent structures comprising an absorbent degradable fibrous core and a back sheet that is cold water-soluble and contains on both sides of the backsheet a discontinuous layer of aqueous-repellent material. A preferred species can be disposed of by toilet flushing.

U.S. Pat. No. 4,057,537 discloses laminates made from a polyhydroxic acid (PHA), copolymer fibrous matrix, which is consolidated into a rigid, non-porous, laminated structure by flowing molten polymer through the fibrous material and curing it while in a mold or hydraulic press. Synthetic or natural fibers such as cellulose fibers are disclosed as the matrix.

Patent Application WO 90/01521 discloses non-porous rigid laminates made from a fibrous mat consolidated by flowing molten PHA polymer through the fibrous material and curing the polymer in a mold or hydraulic press. Fibers can include cellulose derived from wood.

Published patent application WO 64667 describes an invention with multi-layer soluble film, a method of producing such film, a method of packaging a chemical in such film. The multi-layer film comprises a continuous layer of water-soluble material suitable for forming the outer layer of a bag, and a barrier coating affixed to discrete areas of the continuous layer, leaving a plurality of uncoated intervals occurring at repeating distances on the continuous layer. The barrier coating is accomplished by a roll-coating step that is achieved by a direct flexogravure coating process. The thickness of the barrier coating is in the range between 0.025 microns to 25 microns. The thickness of the water-soluble layer is in the range 12 microns to 200 microns.

The processes described in the prior art could result in products with pinholes of varying sizes and numbers, as the *Water Soluble Film* (WSF) is highly susceptible
➢ to outside environmental / climatic factors like heat, humidity, RH, moisture, temperature, cold cracking,
➢ plasticiser migration affecting the easy flow of web of WSF during the process of conversion in processes like printing, slitting, over coating or reacting with outside gases and with packaged products.

During the processing of WSF in the printing or print-coating machine the film stretches causing stress and strain in the film. This leads to the formation of pinholes as it picks up the barrier materials in *stretched* form, not withstanding the best of tension controls put on the machine. After printing or print coating of the barrier materials, the stretched film is wound on a core. During the process of aging in this wound form the WSF tends to return to it's original memory of stress, and has a tendency to "shrink" in the machine direction thereby affecting it's dimensional stability in cross direction. This could result in cracks opening the fragile coatings of barrier with the creation of pinholes. In the processes described therefore require very rigid and expensive environmental control. Such processes have very limited flexibility in that the WSF and its subsequent processing for barrier layering have to be necessarily carried out in the same location.

The processes described in the prior art especially with respect to a single pass barrier coated processes are strongly dependent on the viscosity and solid contents of the barrier material to achieve film thickness needed to manufacture pinhole free barrier coatings. This acts as a limitation for several barrier-coating formulations as a single pass barrier coating system suffers from the disadvantage of not being able to take advantage of using barrier coatings formulations in which the materials are non miscible liquids or liquids having varying pH, viscosity, etc.

### SUMMARY OF THE INVENTION

The main object of the invention is to overcome the weaknesses and unsolved problems of the past and to provide substantially pinhole free multi-layered film products and methods of manufacturing the same. The multi-layered film product consists of a fully or partially water soluble film layered with barrier coating materials that are uniform and substantially free from pinholes, with good gas barrier properties optimal tensile strength, percentage elongation and impact strength to withstand mechanical stresses during the processing and at the same time retain their strength and integrity during storage thereby making them most suited for a variety of applications including packaging of detergents, pharmaceuticals, agro-chemicals, food products etc. The barrier coatings may be continuous of discrete based on the end use application.

Yet another object of the invention is to provide for substrate-based detachable multi-layered films product consisting of a fully or partially water soluble film layered with barrier coating materials that are uniform and substantially free from pinholes, on a wide variety of substrates such as plain or coated paper, plain or embossed fabrics, plain, laminated, embossed or treated polyester films, plain or embossed LDPE / HDPE / HIPS / HMHDPE films or laminations thereof, plain, laminated or Embossed Aluminum foil etc.

Yet another object of the invention is to provide for substrate-based non-detachable multi-layered films with film forming coating materials that are uniform and substantially free from pinholes, on a wide variety of substrates such as plain or coated paper, plain or embossed fabrics, plain, laminated, embossed or treated polyester films, plain or embossed LDPE / HDPE / HIPS /HMHDPE films or laminations thereof, plain, laminated or Embossed Aluminum foil etc.

Yet another object of the invention is to provide a process for using barrier materials such as acrylic acid polymers, acrylic ester polymers, soluble acrylic acid copolymers, soluble acrylic ester copolymers, soluble copolymers of acrylic acids and esters, cross linked polyvinyl alcohols, cross linked cellulose datives, ethyl cellulose, nitrocellulose, cellulose butyrate, cellulose acetate butyrate, ethylene vinyl polyols, ethylene vinyl acetate, PVdC, acrylic emulsion, PVC emulsion, PVDC emulsion, PVB , natural and synthetic waxes, polyurethanes, and modified polyvinyl alcohols, silicone based polymers etc to produce detachable substrate-based multi-layered films. The barrier coatings may be continuous of discrete based on the end use application.

Yet another object of the invention is to produce detached uniform water-soluble substantially pinhole free films with low thickness of 3 microns to thick films of 300 microns.

Yet another object of the invention is to produce uniform and substantially pinhole free barrier films with thickness of 0.25 microns to 50 microns on water soluble or partially soluble films on diverse substrates that may be detachable. The barrier coatings may be continuous or discrete and / or selective based on the end use application.

Yet another object of the invention is to provide multi-layered film product with hot water soluble films with continuously or discretely layered barrier coating of cold-water soluble film or vice-a-versa based on the needs of the end use application. The barrier coatings may be continuous or discrete and / or selective, based on the end use application.

Another object of the invention is to provide novel method of manufacture of detachable substrate based multi-layered film products using a variety of casting processes and their combinations. The barrier coatings may be continuous or discrete and / or selective based on the end use application.

Yet another object of the invention is to provide for novel methods of selective barrier coating of films to achieve films that are substantially free of pinholes. The barrier coatings may be continuous or discrete and / or selective based on the end use application.

Another object of the invention is to provide multiple options for on-line and off-line processing using a detachable substrate with water-soluble film and selective barrier print-coating in flexo-gravure processing individually or in combination involving especially designed roto-gravure cylinders/flexoplates of varying cell shapes, depths, and thickness.

Another object of the invention is to provide multiple options for on-line and off-line using a detachable substrate with water-soluble film and selective barrier print-coating in flexo-gravure processing individually or in combinations involving especially designed roto-gravure cylinders/flexoplates for multi station registrations and/or multipass operations to achieve substantially pin-hole free films.

Yet another object of the invention is to produce substantially free pin hole free films using combined processes involving flexo, gravure or their combination with multipass and / or multi station registration optionally in combination with full or zone coating in air knife, Mayer Bar including wire rod coating, roll over roll, knife over roll, including full or zone, fountainless gravure including reverse roll coating, five roll / multiple roll coating, pre and post water soluble film formation including full or zone coating released at selective discreet areas. These processes can be pre or post the water-soluble film formation.

Yet another object of the invention is to provide processes for manufacture of substantially pin-hole free barrier coated films pre or post the formation of the water soluble film.

Yet another object of the invention is to produce films using a release coated substrate, which is capable of a pre-coating with a barrier material followed by a final extrusion or casting of water-soluble film.

Yet a further object of the invention is to provide novel interlayer incorporated partially of fully water-soluble or insoluble materials in multi layered films and processes for their incorporation by the disclosed methods.

The present invention discloses novel pin-hole free multi-layered films consisting of partially or fully water soluble films layered with substantially pin-hole free barrier coatings that are partially insoluble of fully water-soluble or dispersible and methods of manufacturing. The invention further relates to substrate based multi-layered films with water soluble or partially water-soluble films layered with substantially pinholes free barrier coatings and methods of manufacturing the same. The barrier coatings may be continuous or discrete and / or selective, based on the end use application.

### DESCRIPTION OF THE INVENTION

According to the invention the multi-layered films are prepared by a process broadly comprise the steps of
(i) providing a water soluble film on a detachable substrate, and
(ii) providing a substantially pin hole free barrier coating along the water soluble film or predetermined portion of the water soluble film.

The water-soluble film is prepared on the detachable substrate as under (sheet no.1):
- A batch based on the composition of the water soluble film is charged in the reactor and heated with stirring to ensure good mixing the temperature ranging from 50°C to 250°C, preferably from 60°C to 200°C, more preferably from about 55°C to 170°C.
- Unloading of the batch in the Master Storage Tank maintained at appropriate temperatures.
- Unloading the batch into different storage tanks to enable separate addition of additives under varying conditions and/or to prepare the feed batch to the casting/coating head
- Feeding of the batch to the casting/coating head at appropriate temperatures
- Casting on a selected substrate or the conveyor belt, the temperature being maintained at 10°C to 95°C, preferably between 13°C to 90°C, more preferably between 15°C to 85°C;
- Evaporating the solvents in a controlled manner using heat source, drying of the WSF from step (i), the temperature in the dryers ranging from 50°C to 250°C, preferably from 60°C to 200°C, more preferably from 55°C to 170°C;
- Optional chilling of the substrate based film, the temperature range of the chilling cylinder being from -50 C to +10 C, preferably -30C to + 5 C, more preferably -4 C to +2C.
- Optional detachment of substrate from film
- Winding of substrate-based film or separate winding of the detached films.

Further, substantially pinhole free barrier coating on the full web or at discreet places of the substrate based water-soluble film is achieved by any or combination of the following methods:
A) Roto Gravure Cylinders: Using various combinations of depths of cells, shapes of cells and multiple stations and / or multiple passes.
B) Flexo Plates: Using various combinations of depths of cells, shapes of cells and multiple stations and / or multiple passes.
C) Flexo + Gravure Combination: + Multipass and / or multi station registration.
D) Air knife: Full Coating, Zone Coating
E) Mayer Bar - Wire Rod Coating: Full Coating, Zone Coating
F) Roll over Roll: Full or Zone Coating
G) Knife over Roll: Full or Zone
H) Fountainless Gravure: Full or Zone Coating
I) Reverse Roll Coating: Full or Zone Coating
J) Five Roll / Multiple Roll Coating: Full or Zone Coating
K) Pre and Post water-soluble film - Full or Zone Coating Here the barrier material is released selectively at discreet areas.

### Gravure Cylinder / Flexoplate Designs (sheet nos. 2 and 7)

Gravure cylinders are etched as per the pattern of the discreet barrier coatings to be laid on the substrate based water-soluble film. These etchings are of different screen, shapes and depth. The amount of transfer of the barrier material on to the soluble film is directly proportional to the fineness of the screen on the cylinder. Shapes of the screens on the cylinder can vary with the need. For example they could be triangular, quadrangular, oblique lines, etc. The depth of the screen determines the coat weight of the barrier layer to be transferred. These variables are to be pre-determined based on the barrier material characteristics, such as viscosity, solid content etc., the shape and sizes of the barrier layer zone to be laid on the water-soluble film, thickness of the barrier layer etc. These gravure cylinders and the cells normally have blanks where the lines have not been etched and become responsible for the formation of pinholes in the coated barrier layer.

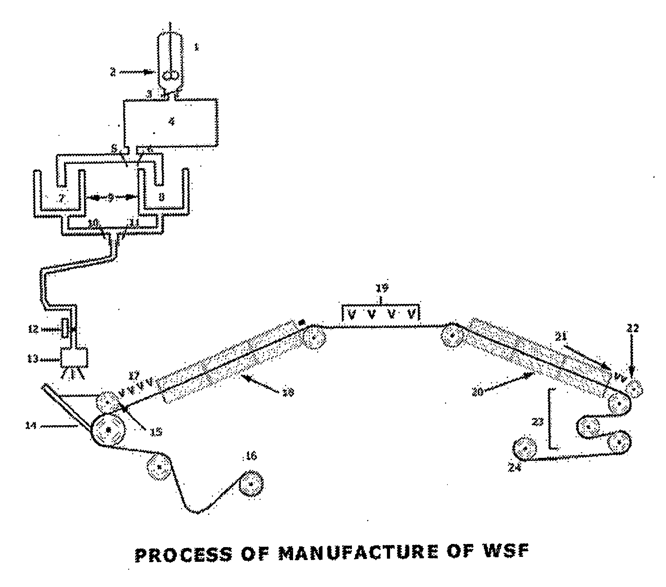

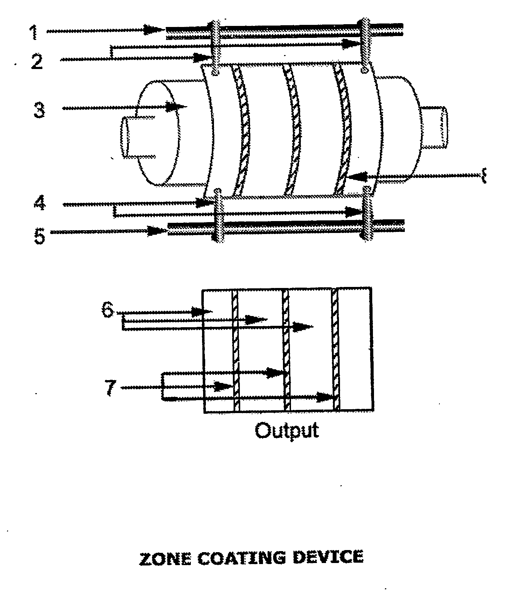

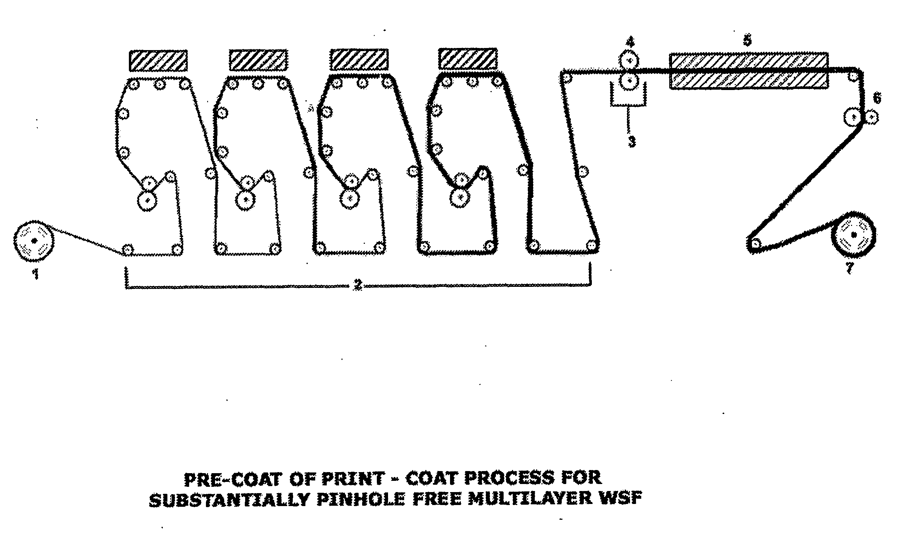

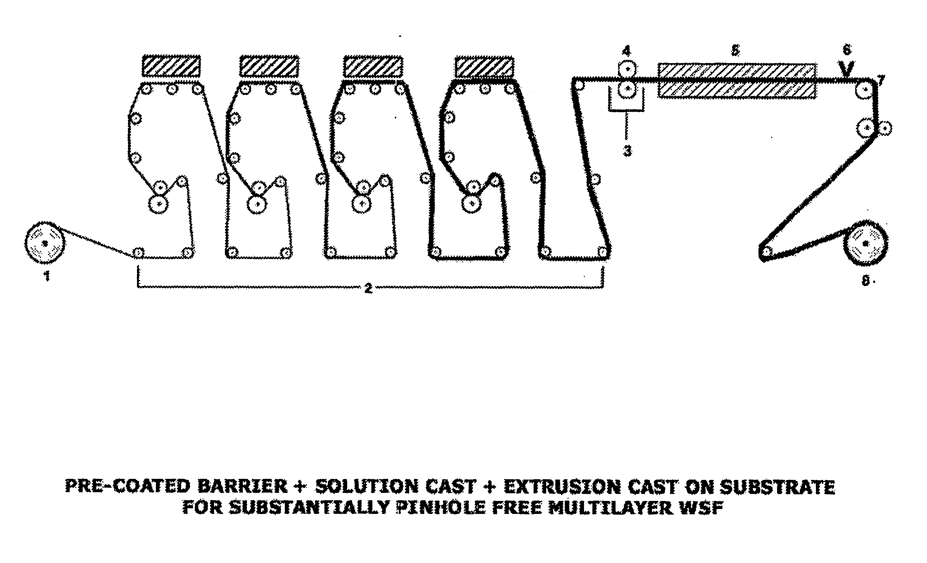

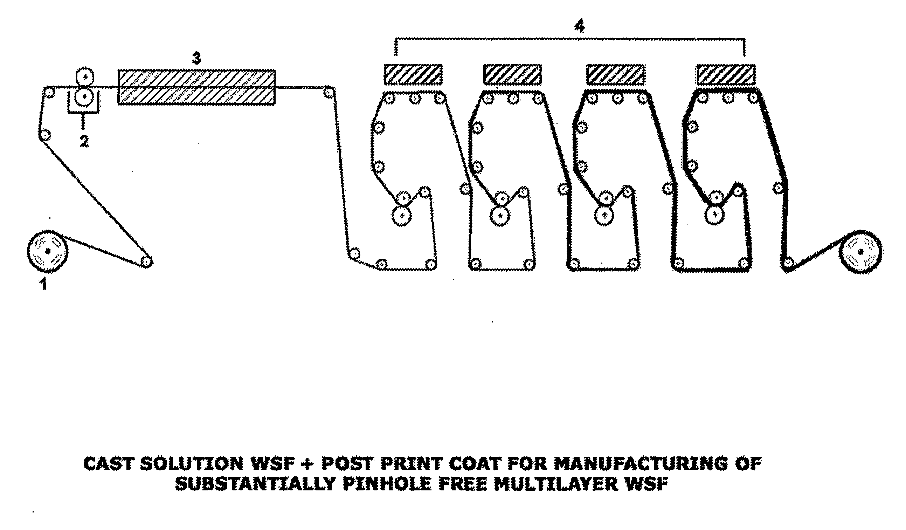

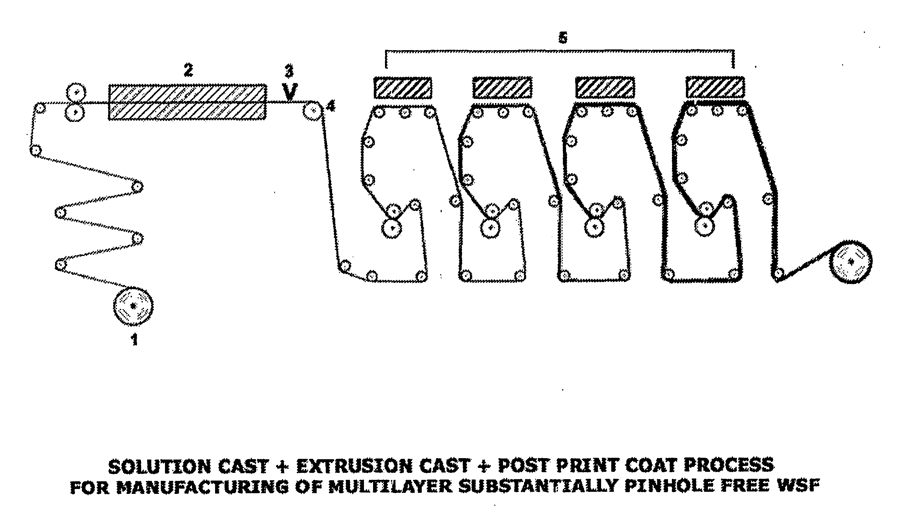

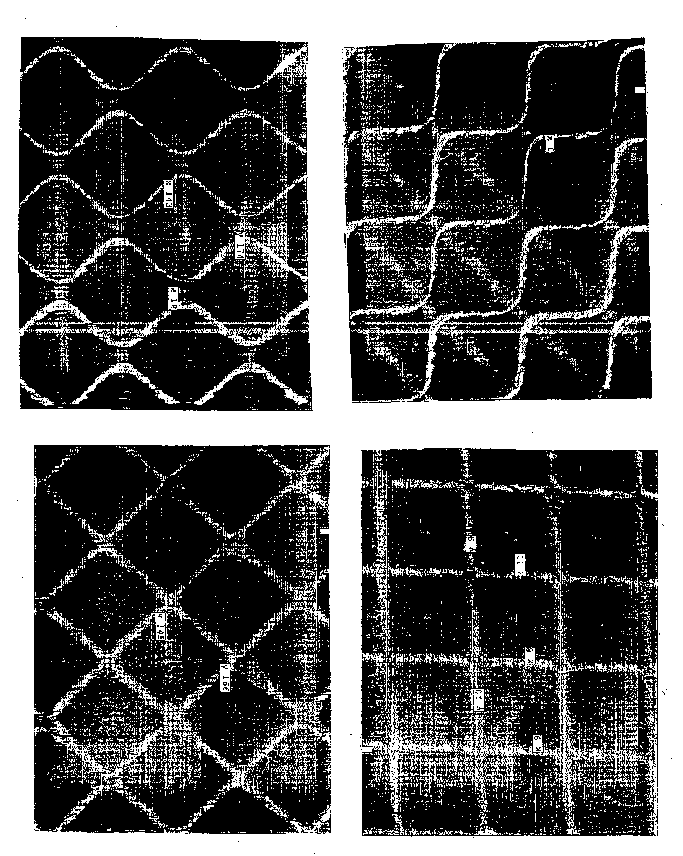

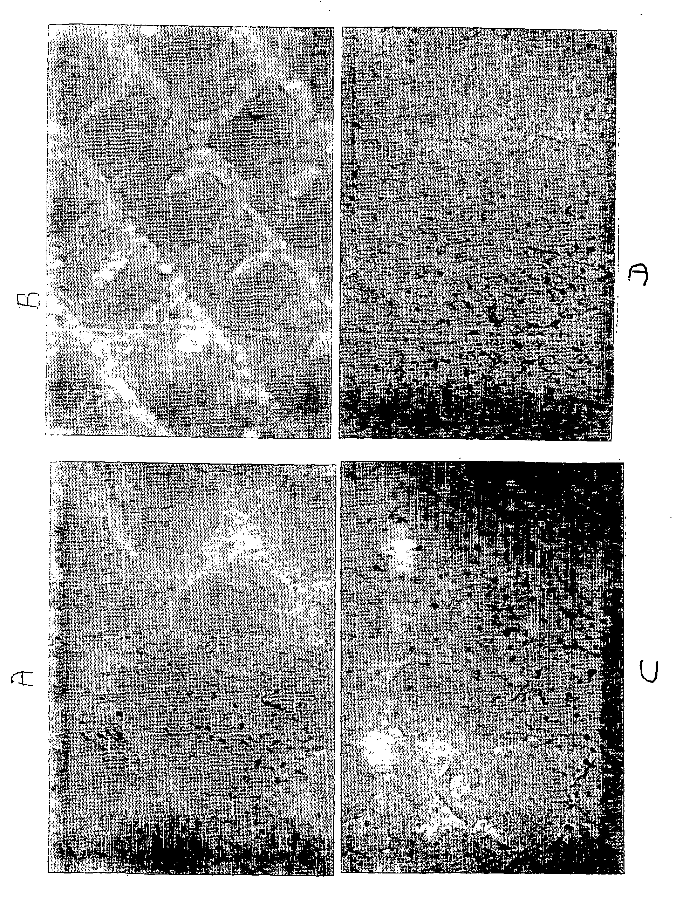

A non-limiting sample of the diverse shapes, sizes and depths of the gravure cylinders used in this process is given in sheet no. 7. The parameters such as the cell widths are marked as "X", and depth of the cell is marked as "Y". The figure also illustrates the cell wall thickness. It should be clear from the figure that the cylinder is so designed as to have a combination of screens/cells that are of different sizes and shapes, so that as the coated barrier layer sequentially passes over them, the previous pin holes are filled up due to overlap the designs of the previous screen/cell and the subsequent one. Such an operation in tandem and in registration is responsible in the final formation of substantially pinhole free barrier layer on the detachable or non-detachable substrate based water-soluble film. Even a reverse printed logo, text or picture can be directly be printed on the water soluble film before or after the barrier layers depending upon the sensitivity of the printing inks to the packaged materials. These multiple layers and reverse printing ensure substantial pinhole free barrier layered product. The gravure process allows the removal of any excess of liquids by the scraping blade and the barrier materials in transferred in a controlled manner to produce the very thin films at every station. The detachable substrate based water soluble film retains proper tension controls and ease in running of the barrier coating which without the substrate would be operationally cumbersome. By using the substrate all environmental factors normally leading to uneven or uncontrollable expansion and contraction of the water-soluble film during the process of barrier layering are avoided as the stresses are borne by the substrate during the process of manufacturing. The present invention also makes it possible to conduct multiple pass, multi-design, multi depth cylinders to ensure substantially pinhole free barrier layers.

The flexoplate designs that may be used for the production of substantially pinhole free barrier coatings are similar to those described for the designing of the gravure cylinders.

### Drying of the Film:

In one of the embodiments involving the drying steps, a set of drying chambers maintained at different temperatures are used for controlled drying of the water-soluble film, the temperature in the dryers ranging from 50°C to 250°C, preferably from 60°C to 200°C, more preferably from 55°C to 170°C; These chambers allow for the controlled removal of the solvent, facilitate the process of controlled semi-gel formation, complete curing, removal the evaporated solvent including the vaporized impurities from within the film.

Various embodiments of the process to produce substantially pinhole free barrier coatings on detachable substrate based soluble films are described below.

In one of the embodiments, release coated substrate is used to pre-coat barrier materials either singly employing flexo or gravure print coat process or in combination with other casting or coating methods to get a final product (sheet no.3) using the following steps.
- Unwinding of the Substrate
- Passing the release coated substrate through various stations of Gravure - Flexo-or coating stations singly or in combinations
- Drying and curing after each station. The temperature range after each station range from 50°C to 200°C, preferably from 60°C to 160°C, more preferably from 55°C to 150°C;
- Passing through the WSF casting station
- Drying and curing. The temperature in the dryers vary from 50°C to 250°C, preferably from 60°C to 200°C, more preferably from 55°C to 170°C
- Optionally chilling the film
- Winding or detaching the substrate and winding.

In an embodiment of this process, a non-detachable substrate may be unwound, followed by a barrier coating at a gravure coating station, and subsequently smoothened by controlled flow of air from an airknife and subjected to drying at appropriate temperatures. Optionally such an operation may be done at a plurality of the gravure stations having airknifes at every stations or at the last station thereby ensuring the minimization of pinholes.

In another embodiment, the process may combine a release-coated substrate on which barrier materials are layered singly or in combination followed by solution casting of WSF and then extrusion casting of WSF (sheet no.4) as follows using.
- Unwinding the substrate
- Passing the release coated substrate through various stations of Gravure - Flexo-or coating stations singly or in combinations
- Drying and curing of the film after each station. The temperature after each station range from 50°C to 200°C, preferably from 60°C to 160°C, more preferably from about 55°C to 150°C;
- Passing of the film through the casting station
- Drying and curing of the film. The temperature in the dryers range from 50°C to 250°C, preferably from 60°C to 200°C, more preferably from 55°C to 170°C
- Extrusion of water-soluble film on the precast water-soluble film. The temperature at extrusion casting head ranges from 350°C to 100°C, preferably from about 300°C to about 250°C, more preferably from 240°C to 150°C.
- Chilling the product
- Winding or detaching the substrate and winding.

In yet another embodiment of the process, a post barrier print coat on solution cast WSF may be performed as follows (sheet no.5):
- Unwinding of the substrate
- Casting of the water soluble film,
- Drying and curing of the film. The temperature in the dryers ranging from 50°C to 250°C, preferably from 60°C to 200°C, more preferably from 55°C to about 170°C
- Passing through various stations of Gravure - Flexo-or coating stations singly or in combinations
- Drying and curing after each station The temperature after each station range from 50°C to 200°C, preferably from 60°C to 160°C, more preferably from 55°C to 150°C;
- Optionally chilling the film
- Winding or detaching the substrate and winding.

In another embodiment, the process may combine Solution Cast with Extrusion cast and laying of barrier layers (sheet no.6) as follows:
- Unwinding of the substrate
- Casting of the water-soluble film
- Drying and curing of the film. The temperature in the dryers ranging from 50°C to 250°C, preferably from 60°C to 200°C, more preferably from 55°C to 170°C
- Extrusion of water-soluble film on the precast water-soluble film
- Pass of the film through various stations of Gravure - Flexo-or coating stations singly or in combinations
- Drying and curing after each station. The temperature after each station range from 50°C to 200°C, preferably from 60°C to 160°C, more preferably from 55°C to 150°C;
- Optionally chilling the film
- Winding or detaching the substrate and winding.

In one of the embodiments of the invention the multi-layered film product consists of the substrate, the water soluble or partially soluble film with the substantially pinhole free layered barrier coating with the option of detaching the substrate during the off-line applications such as pouch making, printing etc.

In another embodiment of the invention the detachment of the substrate may be done on-line at the end step of the production of the substrate based multi-layered film product.

In another embodiment of the invention the substrate based multi-layered product may be used with the substrate as such and the detachment of the substrate takes place during use of the final packed product.

In another embodiment of the invention pinholes can be controlled, using the same process disclosed in this invention with tailored misregistration of the gravure cylinders. However the results would not be as good as the syetem using sequential gravure cylinder of diverse cell designs.

### Example

Gravure Cylinders having various shapes, with depths of 55, 62 and 77 microns, screen angles-lpi of 70-38 , 60-38 and 48-38 respectively using stylus of 120,125 and 135 and cell channel walls of 26,32 and 37 were prepared. Water soluble film was cast by using solution casting method. Casting of solution was done on clear polyester film. The thickness of the WSF was controlled by metering the thickness by roll over roll coating head. The WSF was sent through dryers, the temperature in the dryers ranging from about 50°C to about 250°C, preferably from about 60°C to about 200°C, more preferably from about 55°C to about 170°C; The polyester film and the freshly formed water-soluble film were rewound on a paper core. This web was then taken to a multiple station gravure-printing machine, with an airknife mounted on every station. Dye was mixed with the barrier materials placed in the gravure tray to enable monitoring of the pinholes in the formed layered barrier film under a transmission microscope. The cylinders used had a strip design with the parameters mentioned above. The barrier coating was affected with the passing of the web over the cylinders and the airknife smoothened the coating. Experiments were performed to get single pass, double pass and triple pass. These were repeated with cylinders of different cell designs.

The samples prepared were examined under a transmission microscope for the pinholes. Sheet no.8/9 present a few photographs of such an examination. The gap between the cells in white, as shown in picture in the photographs represents the pinholes. It may be observed that the photographs A and B in sheet number 8 which corresponds to single cell coating shows several pinholes. Photographs C in sheet 8 represent cell on cell coating which leads to substantial reduction in the pinholes as the two cell wells in the subsequent passes do not overlap with each other.

In another set of experiments, coating was affected by gravure cell on cell on cell of different parameters and the passing through a smooth flow of precisely controlled air from between the two lips of the airknife to precisely control the solution flows. This enhances the pinhole free nature of the barrier-coated films as shown in photograph D especially in the case of airknife where the barrier material "filled in" the pinholes, by flowing out the solution so as to cover the cell walls which are responsible for the pinholes.

As water soluble films are sensitive to ambient environment such as heat, cold and relative humidity, the substrate film, for example polyester film, used for casting, ensures that it controls the tension and other film properties during the subsequent process of conversion, particularly when done offline. During offline transportation the substrate also acts as a protective cover to the water-soluble film against environmental variations during transportation to other locations of converters for the barrier coating operations.

The advantages of the present invention is that it provides for optionally detachable substrate based water soluble films continuously or discretely layered with substantially pinhole free barrier coating of controlled thickness, possessing excellent dimensional stability and uniform thickness across the entire length of the film. It also provides means for producing the same using combined processes involving flexo-gravure combination with multi-pass and / or multi station registration optionally in combination with air knife full coating, zone coating, Mayer Bar including Wire Rod coating, full coating, zone coating, roll over roll including full or zone coating, knife over roll including full or zone, fountainless gravure including reverse roll coating, five roll / multiple roll coating, pre and post water soluble film formation including full or zone coating released at selective discreet areas. This provides options for on-line or off-line processing of the substrate based multi-layered film depending on the end use application.

The further advantage of the present invention is that it offers options to prepare the detachable substrate based water soluble film in one location and safely transport it to another location for the barrier coating thereby making it possible multi source the operation based on the need and availability of facilities. Moreover depending on the end use of the product the water-soluble film of the features of the water-soluble films properties (e.g. tack values during the process of formation of the film) the substrate material can be selected to provide special effects or properties. For example if online embossing is desired then an embossed substrate of the particular design maybe chosen. The substrate may be used in several forms such as roll or sheet selected from paper, any heat resistant film fabric, aluminum foil, with or without release (silicon or any other release coated) coatings etc.

Another advantage is wide flexibility of the process to tailor conditions as per the end use of the formulation of the developed properties during the film forming process. For example the substrate may be brought into the process at various stages of the process. For example the substrate that is chosen as per the formulation of the water soluble film at stage I (where the film is not yet formed, but is just casted and is very wet) or at stage II where the film may start becoming tacky or non tacky (release within itself) or at stage III where the film is substantially formed.. External chilling or superfluous offline heating and other treatments are possible, particularly where the film is not fully formed and is let to age internally with infra red heating is needed to give it desired properties. Such flexibility is not possible with a pre-casted water-soluble film, manufactured on a metal belt or by bubble extrusion methods.

In the present invention even non-coated substrates can be used unlike in process involving pressure sensitive adhesives that are permanently tacky and thus cannot function without a silicon or other release coating.

Barrier coated films produced by the process disclosed in this invention have very good machinability, cold crack resistance toughness on all kinds of converting machine, mechanical properties compared to others particularly in tensile strength in both machine and transverse direction. Seal strength is also good in the vertical direction. The heat seal temperature is around 50 deg. C to 200 deg. C depending on the moisture content within the film and the ambient humidity and whether the heat sealing is done with or without the substrate.

The substantially free pinhole free barrier coated films disclosed in this invention are most suited for a variety of applications including packaging of detergents, pharmaceuticals, agro-chemicals, food products, laundry, etc. involving wrapping, pouches, bags, containers, etc. These also find applications in embroidery and allied areas.

## Claims

1. A multi-layered barrier coated film comprising:
i) at least one layer of water soluble polymeric film, and
ii) a barrier coating on at least one side of the water soluble polymeric film, said barrier coating having a plurality of directly adjacent layers wherein pin holes in each layer of said barrier coating do not overlap with each other whereby said layered barrier coating is pin hole free..

2. A multi-layered barrier coated film as claimed in claim 1 further comprising a substrate, optionally a detachable substrate, and the substrate is preferably selected from plain or coated paper, plain or embossed fabrics, plain, laminated, embossed or treated polyester films, plain or embossed LDPE / HDPE / HIPS / HMHDPE films or laminations thereof, plain, laminated or embossed aluminum foil.

3. A multi-layered barrier coated film as claimed in any one of the preceding claims wherein the barrier material is selected from acrylic acid polymers, acrylic ester polymers, soluble acrylic acid copolymers, soluble acrylic ester copolymers, soluble copolymers of acrylic acids and esters, cross linked polyvinyl alcohols, cross linked cellulose derivatives, ethyl cellulose, nitrocellulose, cellulose butyrate, cellulose acetate butyrate, ethylene vinyl polyalcohol, ethylene vinyl acetate, PVDC, acrylic emulsion, PVC emulsion, PVDC emulsion, PVB , natural arid synthetic waxes, polyurethanes, modified polyvinyl alcohols and silicone based polymers.

4. A multi-layered barrier coated film as claimed in any one of the preceding claims wherein the film thickness is 3 microns to 300 microns and the thickness of the barrier coating is 0.20 microns to 50 microns.

5. A multi-layered barrier coated film as claimed in any one of the preceding claims wherein the barrier coating and polymeric film are soluble in water at different temperatures.

6. A process for the preparation of a multi-layered barrier coated film comprising a water soluble film and a barrier coating wherein the barrier coating is applied in a plurality of directly adjacent layers such that pin holes in each layer do not overlap with each other whereby a pin hole free layered barrier coating is produced.

7. A process as claimed in claim 6 wherein the barrier coating is applied using multiple gravure coating stations.

8. A process as claimed in claim 7 wherein the barrier coating is applied using multiple flexo coating stations.

9. A process as claimed in claim 7 wherein each gravure coating station employs a cylinder using various combinations of depths of cells, shapes of cells.

10. A process as claimed in claim 8 wherein each flexo coating station employs a flexo plate using various combinations of depths of cells, shapes of cells.

11. A process as claimed in claim 9 wherein the cylinder is designed with combinations of cells that are of different sizes and shapes and the barrier layer is formed by sequentially passing the combinations such that previous pin holes are filled up.

12. A process as claimed in any one of claims claim 6 to 11 wherein the barrier coating is applied to the water soluble film on a substrate, optionally a detachable substrate which may be removed on-line or off-line, for example in use of the multi-layered films to produce a packed product such as pouch making, printing or during use of the final packed product.

13. A process as claimed in claim 12 wherein the water soluble film is formed by the steps of:-
i. preparing a batch solution based on the composition of the water soluble film
ii. optionally adding additives under varying conditions to the batch solution
iii. feeding the batch solution to a casting/coating head
iv. casting the water soluble film on a selected substrate
v. pre-curing the substrate based water soluble film using a heat source
vi. optionally chilling of the substrate based water soluble film
vii optionally detaching of the substrate from the water soluble film and
viii winding the water soluble film with or without the substrate on a winder.

14. A process as claimed in claim 13 wherein the pre-curing step is carried out at a temperature between 40°C to 220°C for controlled drying of the water-soluble film allowing for the controlled removal of the solvent, controlled semi-gel formation, complete curing and removal of the evaporated solvent including the vaporised impurities from within the film.

15. A process as claimed in claim 6 wherein the multi-layered film is prepared using a release coated substrate which is capable of pre-coating with a barrier material followed by application of water-soluble film.

16. A process as claimed in claim 6 wherein an interlayer with partially or fully water-soluble or insoluble materials is incorporated in the multi-layered films.

17. A process as claimed in claim 6 wherein the barrier coating is applied continuously using full coating or discretely using zone coating.

18. A process as claimed in claim 6 wherein the barrier coating is applied to a release-coated substrate followed by casting of water soluble film and then extrusion of water soluble film, preferably as follows:
• Unwinding a release coated substrate
• Applying the barrier coating to the substrate by passing the release coated substrate through various stations of Gravure-Flexo-or coating stations singly or in combinations
• Drying and curing of the film after each station, the temperature after each station ranging from 50°C to 200°C, preferably from 60°C to 160°C, more preferably from 55°C to 150°C;
• Applying water soluble film by passing of the barrier coated substrate through a casting station
• Drying and curing of the film, the temperature in the dryers ranging from 50°C to 250°C, preferably from 60°C to 200°C, more preferably from about 55°C to 170°C
• Extruding water-soluble film on the precast water-soluble film, the temperature at extrusion casting head ranging from 350°C to 100°C, preferably from 300°C to 250°C, more preferably from 240°C to 150°C
• Chilling the product
• Winding or detaching the substrate and winding.

19. A process as claimed in claim 6 wherein the barrier coating is applied to water soluble film on a substrate, preferably as follows:
• Unwinding of the substrate
• Casting of the water soluble film
• Drying and curing of the film, the temperature in the dryers ranging from 50°C to 250°C, preferably from 60°C to 200°C, more preferably from 55°C to about 170°C
• Extrusion of water-soluble film on the precast water-soluble film.
• Applying the barrier coating by passing the film through various stations of Gravure-Flexo-or coating stations singly or in combinations.
• Drying and curing after each station, the temperature after each station ranging from 50°C to 200°C, preferably from 60°C to 160°C, more preferably from 55°C to 150°C ;
• Optionally chilling the film
• Winding or detaching the substrate and winding.

20. A process as claimed in claim 6 further comprising providing a substrate, and forming said multi-layered barrier coated film on said substrate, wherein said substrate provides tension control during formation of said multi-layered barrier coated film.

## Patentansprüche

1. Eine mehrlagige Sperrschichtfolie bestehend aus:
i) mindestens einer Schicht wasserlöslicher Polymerfolie und
ii) einer Sperrschicht auf mindestens einer Seite der wasserlöslichen Polymerfolie, wobei die genannte Sperrschicht eine Vielzahl von direkt aneinandergrenzenden Schichten aufweist, worin nadelfeine Löcher in jeder Schicht der genannten Sperrschicht nicht miteinander überlappen und wobei die genannte mehrlagige Sperrschicht frei von nadelfeinen Löchern ist.

2. Eine mehrlagige Sperrschichtfolie, wie in Anspruch 1 beansprucht, die überdies eine Trägerschicht umfasst, wobei es sich wahlweise um eine ablösbare Trägerschicht handeln kann, und die Trägerschicht vorzugsweise aus Normalpapier oder beschichtetem Papier, einfachen oder geprägten Geweben, einfachen, laminierten, geprägten oder behandelten Polyesterfolien, einfachen oder geprägten LDPE- / HDPE- / HIPS- / HMHDPE-Folien oder Laminierungen davon bzw. einfacher, laminierter oder geprägter Aluminiumfolie ausgewählt wird.

3. Eine mehrlagige Sperrschichtfolie, wie in einem der vorhergehenden Ansprüche beansprucht, worin das Sperrschichtmaterial aus Acrylsäurepolymeren, Acrylesterpolymeren, löslichen Acrylsäurecopolymeren, löslichen Acrylestercopolymeren, löslichen Copolymeren von Acrylsäuren und -estern, vernetzten Polyvinylalkoholen, vernetzten Cellulosederivaten, Ethylcellulose, Nitrocellulose, Cellulosebutyrat, Celluloseacetobutyrat, Polyethylenvinylalkohol, Ethylenvinylacetat, PVDC, Acrylemulsion, PVC-Emulsion, PVDC-Emulsion, PVB, natürlichen trockenen synthetischen Wachsen, Polyrurethanen, modifizierten Polyvinylalkoholen und silikonbasierten Polymeren ausgewählt wird.

4. Eine mehrlagige Sperrschichtfolie, wie in einem der vorhergehenden Ansprüche beansprucht, worin die Folie 3 Mikron bis 300 Mikron dick ist und die Sperrschicht 0,20 Mikron bis 50 Mikron dick ist.

5. Eine mehrlagige Sperrschichtfolie, wie in einem der vorhergehenden Ansprüche beansprucht, worin die Sperrschicht und die Polymerfolie bei unterschiedlichen Temperaturen in Wasser löslich sind.

6. Ein Verfahren zur Herstellung einer mehrlagigen Sperrschichtfolie, die eine wasserlösliche Folie und eine Sperrschicht umfasst, worin die Sperrschicht in einer Vielzahl von direkt aneinandergrenzenden Schichten appliziert wird, sodass die nadelfeinen Löcher in jeder Schicht nicht miteinander überlappen, wodurch eine mehrlagige Sperrschicht ohne nadelfeine Löcher entsteht.

7. Ein Verfahren, wie in Anspruch 6 beansprucht, worin die Sperrschicht mithilfe von mehreren Gravurbeschichtungsstationen aufgetragen wird.

8. Ein Verfahren, wie in Anspruch 7 beansprucht, worin die Sperrschicht mithilfe von mehreren Flexobeschichtungsstationen aufgetragen wird.

9. Ein Verfahren, wie in Anspruch 7 beansprucht, wobei in jeder Gravurbeschichtungsstation ein Zylinder eingesetzt wird, der verschiedene Kombinationen von Zellentiefen und -formen verwendet.

10. Ein Verfahren, wie in Anspruch 8 beansprucht, wobei in jeder Flexobeschichtungsstation eine Flexoplatte eingesetzt wird, die verschiedene Kombinationen von Zellentiefen und -formen verwendet.

11. Ein Verfahren, wie in Anspruch 9 beansprucht, worin der Zylinder mit Kombinationen von Zellen, die verschiedene Größen und Formen aufweisen, gestaltet ist, und die Sperrschicht geformt ist, indem die Kombinationen der Reihe nach passiert werden, sodass die vorhergehenden nadelfeinen Löcher aufgefüllt werden.

12. Ein Verfahren, wie in einem der Ansprüche 6 bis 11 beansprucht, worin die Sperrschicht auf die wasserlösliche Folie auf einer Trägerschicht aufgetragen wird, die wahlweise ablösbar ist und online oder offline entfernt werden kann, z.B. bei der Verwendung der Mehrschichtfolie zur Herstellung eines abgepackten Produkts, etwa der Herstellung oder dem Bedrucken eines Beutels, oder während der Verwendung des abgepackten Endprodukts.

13. Ein Verfahren, wie in Anspruch 12 beansprucht, worin die wasserlösliche Folie in folgenden Schritten gebildet wird:-
i. Herstellen einer Chargenlösung basierend auf der Zusammensatzung der wasserlöslichen Folie
ii. wahlweise Hinzufügen von Zusatzstoffen zur Chargenlösung unter unterschiedlichen Bedingungen
iii. Zuführen der Chargenlösung zu einem Gieß-/Beschichtungskopf
iv. Gießen der wasserlöslichen Folie auf einer ausgewählten Trägerschicht
v. Vorhärten der Trägerschicht-basierten wasserlöslichen Folie mithilfe einer Wärmequelle
vi. wahlweise Auskühlen der Trägerschicht-basierten wasserlöslichen Folie
vii. wahlweise Ablösen der Trägerschicht von der wasserlöslichen Folie viii Aufwickeln der wasserlöslichen Folie mit oder ohne Trägerschicht auf einer Aufwickelvorrichtung

14. Ein Verfahren, wie in Anspruch 13 beansprucht, worin der Vorhärtungsschritt bei einer Temperatur zwischen 40°C und 220°C durchgeführt wird, um die wasserlösliche Folie kontrolliert zu trocknen, was das kontrollierte Entfernen des Lösungsmittel, die kontrollierte Bildung eines Halbgels, das vollständige Härten und Entfernen des verdampften Lösungsmittels, einschließlich der verdampften Unreinheiten aus dem Inneren der Folie, ermöglicht.

15. Ein Verfahren, wie in Anspruch 6 beansprucht, worin die Mehrschichtfolie hergestellt wird, indem eine abziehbare Trägerschicht verwendet wird, die sich für die Vorbeschichtung mit einem Sperrschichtmaterial eignet, gefolgt vom Auftragen einer wasserlöslichen Folie.

16. Ein Verfahren, wie in Anspruch 6 beansprucht, worin eine Zwischenschicht mit teilweise oder vollständig wasserlöslichen oder nicht wasserlöslichen Materialien in die Mehrschichtfolien eingefügt wird.

17. Ein Verfahren, wie in Anspruch 6 beansprucht, worin die Sperrschicht mit Hilfe der Vollflächen-Beschichtung kontinuierlich oder mit Hilfe der Teilflächen-Beschichtung getrennt appliziert wird.

18. Ein Verfahren, wie in Anspruch 6 beansprucht, worin die Sperrschicht auf eine abziehbare Trägerschicht appliziert wird, gefolgt vom Gießen einer wasserlöslichen Folie mit nachfolgender Extrusion der wasserlöslichen Folie, was am besten auf folgende Weise geschieht:
• Abwickeln einer abziehbaren Trägerschicht;
• Applizieren der Sperrschicht auf die Trägerschicht, indem die abziehbare Trägerschicht verschiedene Stationen der Gravur-Flexo- oder Beschichtungsstationen entweder einzeln oder in Kombinationen durchläuft;
• Trocknen und Härten der Folie nach jeder Station, wobei die Temperatur nach jeder Station zwischen 50°C und 200°C, besser zwischen 60°C und 160°C und am besten zwischen 55°C und 150°C beträgt;
• Applizieren von wasserlöslicher Folie, indem die mit der Sperrschicht beschichtete Trägerschicht eine Gießstation durchläuft;
• Trocknen und Härten der Folie, wobei die Temperatur in den Trocknern zwischen 50°C und 250°C, besser zwischen 60°C und 200°C und am besten zwischen 55°C und 170°C beträgt;
• Extrudieren von wasserlöslicher Folie auf der vorgefertigten wasserlöslichen Folie, wobei die Temperatur am Stranggusskopf zwischen 350°C und 100°C, besser zwischen 300°C und 250°C und am besten zwischen 240°C und 150°C beträgt;
• Abkühlen des Produkts;
• Aufwickeln oder Ablösen der Trägerschicht und Aufwickeln.

19. Ein Verfahren, wie in Anspruch 6 beansprucht, worin die Sperrschicht auf eine wasserlösliche Folie auf einer Trägerschicht appliziert wird, was am besten auf folgende Weise geschieht:
• Abwickeln der Trägerschicht;
• Gießen der wasserlöslichen Folie;
• Trocknen und Härten der Folie, wobei die Temperatur in den Trocknern zwischen 50°C und 250°C, besser zwischen 60°C und 200°C und am besten zwischen 55°C und 170°C beträgt;
• Extrudieren der wasserlöslichen Folie auf der vorgefertigten wasserlöslichen Folie;
• Applizieren der Sperrschicht, indem die Folie entweder einzeln oder in Kombinationen verschiedene Stationen der Gravur-Flexo-oder Beschichtungsstationen durchläuft;
• Trocknen und Härten nach jeder Station, wobei die Temperatur nach jeder Station zwischen 50°C und 200°C, besser zwischen 60°C und 160°C und am besten zwischen 55°C und 150°C beträgt;
• wahlweise Abkühlen der Folie;
• Aufwickeln oder Ablösen der Trägerschicht und Aufwickeln.

20. Ein Verfahren, wie in Anspruch 6 beansprucht, das überdies Folgendes beinhaltet: Bereitstellen einer Trägerschicht und Bilden der genannten mehrlagigen Sperrschichtfolie auf der genannten Trägerschicht, wobei die genannte Trägerschicht während der Bildung der genannten mehrlagigen Sperrschichtfolie eine Spannungskontrolle bietet.

## Revendications

1. Film multicouches à revêtement formant barrière comprenant :
i) au moins une couche de film polymère soluble dans l'eau, et
ii) un revêtement formant barrière sur au moins un côté du film polymère soluble dans l'eau, ledit revêtement formant barrière ayant une pluralité de couches adjacentes dans lesquelles les trous d'épingle dans chaque couche dudit revêtement formant barrière ne se chevauchent pas les uns aux autres, ledit revêtement formant barrière à couches étant ainsi dénué de trous d'épingle.

2. Film multicouches à revêtement formant barrière selon la revendication 1, comprenant en outre un substrat, éventuellement un substrat détachable et le substrat est de préférence sélectionné parmi un papier brut ou un papier couché, des tissus de base ou gaufrés, des films de polyester de base, stratifiés, gaufrés ou traités, des films de LDPE /HDPE / HIPS / HMHDPE de base ou gaufrés ou des stratifiés de ceux-ci, des feuilles d'aluminium de base, stratifiées ou gaufrées.

3. Film multicouches à revêtement formant barrière selon l'une quelconque des revendications précédentes, dans lequel le matériau formant barrière est sélectionné parmi polymères d'acide acrylique, polymères d'esters acryliques, copolymères d'acide acrylique soluble, copolymères d'esters acryliques solubles, copolymères solubles d'acides acryliques et d'esters, alcools de polyvinyle réticulés, dérivés de cellulose réticulés, éthyle cellulose, nitrocellulose, butyrate de cellulose, acétobutyrate de cellulose, polyalcool d'éthylène vinyle, acétate d'éthylène vinyle, PVDC, émulsion acrylique, émulsion de PVC, émulsion de PVDC, PVB, cires synthétiques arides naturelles, polyuréthanes, alcools de polyvinyle modifiés et polymères à base de silicone.

4. Film multicouches à revêtement formant barrière selon l'une quelconque des revendications précédentes dans lequel l'épaisseur du film est de 3 microns à 300 microns et l'épaisseur du revêtement formant barrière est de 0,20 à 50 microns.

5. Film multicouches à revêtement formant barrière selon l'une quelconque des revendications précédentes, dans lequel le revêtement formant barrière et le film polymère sont solubles dans l'eau à différentes températures.

6. Procédé de préparation d'un film multicouches à revêtement formant barrière renfermant un film soluble dans l'eau et un revêtement servant de barrière dans lequel ce dernier est appliqué en une pluralité de couches directement adjacentes de sorte que les trous d'épingle ne se chevauchent pas les uns aux autres dans chaque couche et par le moyen duquel il est produit un revêtement formant barrière à couches dénuées de trous d'épingle.

7. Procédé selon la revendication 6, dans lequel le revêtement formant barrière est appliqué en utilisant des stations de couchage par gravure multiples.

8. Procédé selon la revendication 7, dans lequel le revêtement isolant est appliqué en utilisant des stations de couchage par flexographie multiples.

9. Procédé selon la revendication 7, dans lequel chaque station de couchage par gravure se sert d'un cylindre en utilisant diverses combinaisons de profondeurs et de formes de cellules.

10. Procédé selon la revendication 8, dans lequel chaque station de couchage par flexographie se sert d'une plaque de flexographie en utilisant diverses combinaisons de profondeurs et de formes de cellules.

11. Procédé selon la revendication 9, dans lequel le cylindre est conçu avec des combinaisons de cellules qui sont de tailles et de formes différentes et la couche formant barrière est formée en passant séquentiellement les combinaisons de manière à ce que les trous d'épingle précédents soient remplis.

12. Procédé selon l'une quelconque des revendications 6 à 11, dans lequel le revêtement formant barrière est appliqué au film soluble dans l'eau sur un substrat, éventuellement un substrat détachable qui peut être enlevé en ligne ou hors ligne, par exemple lors de l'utilisation des films multicouches afin de produire un produit contenu dans un emballage, comme dans la fabrication et l'impression de sachets ou durant l'utilisation du produit contenu dans un emballage final.

13. Procédé selon la revendication 12, dans lequel le film soluble dans l'eau est formé par les étapes consistant à : -
i) préparer une solution en masse basée sur la composition du film soluble dans l'eau
ii) ajouter éventuellement des additifs sous des conditions diverses à la solution en masse
iii) alimenter la solution en masse à une tête de coulée/de revêtement
iv) couler le film soluble dans l'eau sur un substrat choisi
v) pré-durcir le film soluble dans l'eau à base de substrat en utilisant une source de chaleur
vi) éventuellement refroidir le film soluble dans l'eau à base de substrat
vii) éventuellement détacher le substrat du film soluble dans l'eau et
viii) enrouler le film soluble dans l'eau avec ou sans le substrat sur un enrouleur

14. Procédé selon la revendication 13 dans lequel l'étape de pré-durcissement est réalisée à une température comprise entre 40°C et 220°C pour le séchage contrôlé du film soluble dans l'eau en s'assurant du retrait contrôlé du solvant, de la formation contrôlée du semi-gel, du durcissement complet et du retrait du solvant évaporé, y compris des impuretés vaporisées de l'intérieur du film.

15. Procédé selon la revendication 6, dans lequel le film multicouches est préparé en utilisant un substrat à libération prolongée apte à recevoir un pré-revêtement fait d'une matière formant barrière qui est suivi de l'application d'un film soluble dans l'eau.

16. Procédé selon la revendication 6, dans lequel une couche intermédiaire, faite de matières partiellement ou complètement solubles dans l'eau ou insolubles dans l'eau, est incorporée dans les films multicouches.

17. Procédé selon la revendication 6, dans lequel le revêtement formant barrière est appliqué de manière continue en utilisant un revêtement complet ou en utilisant discrètement un revêtement de délimitation de zones.

18. Procédé selon la revendication 6, dans lequel le revêtement formant barrière est appliqué à un substrat à libération prolongée, suivi de la coulée d'un film soluble dans l'eau et ensuite de l'extrusion du film soluble dans l'eau, de préférence en suivant les étapes consistant à :
• Dérouler un substrat à libération prolongée
• Appliquer le revêtement formant barrière au substrat en faisant passer le substrat à libération prolongée par diverses stations de revêtement par gravure ou par flexographie séparément ou en association
• Sécher et durcir le film après chaque station, la température dans chaque station se situant entre 50°C et 200°C, de préférence entre 60°C et 160°C, mieux encore entre 55°C et 150°C.
• Appliquer le film soluble dans l'eau en faisant passer le substrat revêtu d'une couche formant barrière par une station de coulée
• Sécher et durcir le film, la température dans les séchoirs se situant entre 50°C et 250°C, de préférence entre 60°C et 200°C, mieux encore entre 55°C et 170°C
• Extruder le film soluble dans l'eau sur le film soluble dans l'eau préformé, la température au niveau de la tête de coulée par extrusion se situant entre 350° C et 100°C, de préférence entre 300°C et 250°C, mieux encore entre 240°C et 150°C.
• Refroidir le produit
• Enrouler ou détacher le substrat et l'enroulement.

19. Procédé selon la revendication 6, dans lequel le revêtement formant barrière est appliqué à un film soluble dans l'eau sur un substrat, de préférence en suivant les étapes consistant à :
• Dérouler le substrat
• Couler le film soluble dans l'eau
• Sécher et durcir le film, la température dans les séchoirs se situant entre 50°C et 250°C, de préférence entre 60°C et 200°C, mieux encore entre 55°C et environ 170°C
• Extruder le film soluble dans l'eau sur le film soluble dans l'eau pré-coulé.
• Appliquer le revêtement formant barrière en faisant passer le film par divers stations de revêtement par gravure ou par flexographie séparément ou en association
• Sécher et durcir après chaque station, la température après chaque station se situant entre 50°C et 200°C, de préférence entre 60°C et 160°C, mieux encore entre 55°C et 150°C ;
• Éventuellement refroidir le film
• Enrouler ou détacher le substrat et l'enroulement.

20. Procédé selon la revendication 6 consistant en outre à procurer un substrat et à former ledit film multicouches revêtu d'une couche formant barrière sur ledit substrat, dans lequel ledit substrat procure un contrôle de la tension pendant la formation dudit film multicouches formant barrière.
